# EUROPÄISCHE PATENTSCHRIFT

(11) **EP 1 253 194 B1**
(45) Veröffentlichungstag und Bekanntmachung des Hinweises auf die Patenterteilung: **23.07.2008**
(21) Anmeldenummer: 02009179.9
(22) Anmeldetag: 25.04.2002
(51) Int. Cl.: C12C 7/22, C12C 13/00

(54) **Verfahren und Vorrichtung zur Würzebereitung bei der Bierherstellung**
Method and apparatus for wort preparation during beer production
Procédé et appareil de préparation de moût de bière pendant la production de bière

(30) Priorität: 27.04.2001 DE 10120902
(43) Veröffentlichungstag der Anmeldung: 30.10.2002
(73) Patentinhaber: Kaspar Schulz Brauereimaschinenfabrik & Apparatebauanstalt KG, 96052 Bamberg (DE)
(72) Erfinder: Binkert, Jörg, 96149 Breitengüssbach (DE)
(74) Vertreter: Eichstädt, Alfred

(56) Entgegenhaltungen:
- WO-A-99/06525
- DE-A- 3 012 591
- DE-A- 3 508 754
- DE-A- 3 513 811
- DE-B- 1 055 482
- DE-C- 3 226 310
- DE-C- 3 320 627
- DE-C- 19 747 106
- DE-C- 19 828 686
- GB-A- 1 051 726

## Beschreibung

Die Erfindung betrifft ein Verfahren und eine Vorrichtung zur Würzebereitung bei der Bierherstellung sowie einen Expansionsbehälter, welcher im Rahmen der Würzebereitung verwendet werden kann.

Bei der Bierherstellung kommt der Würzebereitung eine große Bedeutung zu. Ein wichtiger Abschnitt bei dieser Würzebereitung ist der sogenannte Würzekochprozess. Bei diesem Würzekochen wird bei allen herkömmlichen Systemen die Würze zum Sieden gebracht. Der Würzekochprozess hat die folgenden Aufgaben: Sterilisation der Würze und Zerstörung der Enzyme durch Hitze, Ausscheidung gerinnbarer Eiweißsubstanzen, Lösung der Hopfenbitterstoffe, Austreibung unerwünschter Aromastoffe, Verdampfung überschüssigen Wassers zur Einstellung einer bestimmten Würzekonzentration und Bildung von Geschmacks- und Aromakomponentensubstanzen. Um diese Aufgaben durchführen zu können ist es bei den bekannten Verfahren notwendig, der Würze thermische Energie zuzuführen. Es ist jedoch lediglich für das Verdampfen von Wasser und das Austreiben von Aromastoffen notwendig, der Würze Verdampfungswärme zuzuführen, um die Flüssigkeit am Sieden zu halten.

Neben dem klassischen Würzekochen sind weiterhin Systeme bekannt, mit denen die Kochzeit verringert werden kann, indem man das Ausdampfen intensiviert. Dies kann beispielsweise durch eine Schaffung großer Oberflächen geschehen, über die das verdampfte Gas austreten kann. Weiterhin kann dies erreicht werden durch ein Verdampfen in einem Entspannungskühler, in welchem mittels Vakuum die Verdampfungswärme aus der Entspannung im Vakuum gewonnen wird. Weiterhin ist bereits ein Verfahren bekannt, bei dem die Zufuhr der Verdampfungswärme über eine große Oberfläche erfolgt.

Aus der GB 129 549 ist bereits eine Verteilung der Würze beim Austritt aus einem Innenkocher über den gesamten Querschnitt der Würzepfanne zur Erzielung einer besseren Ausdampfung bekannt.

Weiterhin beschreibt die DE 30 18 111 C2 eine Würzepfanne mit einem Außenkocher. Der Eintritt der Würze in die Würzepfanne erfolgt über einen Verteilerschirm, um somit über den gesamten Pfannenquerschnitt eine Ausdampfung der Würze zu ermöglichen.

Ferner ist aus der DE 198 28 686 C1 ein Gefäß mit einer kegelförmigen Oberfläche zur Ausdampfung und Aufheizung der Würze bekannt. Dieses Gefäß kann auch dazu benutzt werden, nach dem Whirlpool direkt vor dem Abkühlen durch Zufuhr von thermischer Energie eine nochmalige Ausdampfung unter atmosphärischem Druck oder im Vakuum zu erreichen.

Aus der DE 35 13 811 A1 ist ein Verfahren zur chargenweisen Kochung und Kühlung von Bierwürze bekannt, bei welchem sowohl durch Kondensation der Entspannungsbrüden in der ersten als auch indirekten Wärmetausch in der zweiten Kühlstufe Brau- oder Betriebswasser erwärmt wird, wobei die Abkühlung der Würze in der ersten Stufe soweit erfolgt, dass sowohl in der ersten als auch in der zweiten Kühlstufe jeweils das Brau- oder Betriebswasser auf die gewünschte Endtemperatur erhitzt wird. Bei diesem Verfahren wird die Würze auf eine Kochtemperatur von 99°C aufgeheizt und bei dieser Temperatur 90 Minuten lang gekocht.

Aus der DE 30 12 591 A1 ist eine Einrichtung zur kontinuierlichen Würzekochung bekannt, mittels welcher der Energiebedarf und der Hopfenverbrauch gesenkt wird. Dies wird erreicht durch einen dem Reaktor und einer oder mehreren Entspannungsstufen in Reihe nachgeschalteten Vakuumverdampfern mit zwei oder mehr Stufen. Dabei erfolgt die nachgeschaltete Vakuumverdampfung der Würze unter Einsatz der Brüden der einzelnen Stufen für die Nutzung von Niedertemperaturwärme, insbesondere in gegenläufig zur Würze hintereinander geschalteten Brüdenkondensatoren für ein Nacherwärmen von Brauwasser und ferner einen dem Vakuumverdampfer nachgeschalteten Würzekühler insbesondere mit Brauwasser als Kühlmittel.

Aus der GB 1 051 726 ist ein Verfahren zur kontinuierlichen Behandlung von Würze bekannt, bei welchem die Würze zu einer Haltezone transportiert wird, in welcher die Temperatur auf über 212° Fahrenheit erhöht wird und in welcher der Druck groß genug ist, um eine Entwicklung von Dampf zu vermeiden. Anschließend wird die Würze von der Haltezone durch eine kehlenförmige Vorrichtung in eine Kammer geführt, um unerwünschte Bestandteile zu verdampfen. Der Druck in der Kammer entspricht dem Atmosphärendruck, der niedriger ist als der Druck in der Haltezone, so dass der gewünschte Grad der Verdampfung der flüchtigen Komponenten erhalten wird.

Aus der DE 33 20 627 C1 ist ein Thermoreaktionsgefäß kreisförmigen Querschnitts bekannt, in das die Würze unter Druck tangential eingeleitet wird, in diesem zunächst bei maximaler Strömungsgeschwindigkeit entlang der Gefäßwandung auf einem kreisbogenförmigen Bahnabschnitt bewegt, mit zunehmender Verweildauer im Gefäß abgebremst und dabei auf einer etwa spiralförmigen Bahn zur Gefäßmittelachse hin abgelenkt, entlang der Gefäßmittelachse gesammelt und schließlich axial aus dem Gefäß abgeführt wird.

Aus der DE 197 47 106 C1 sind ein Verfahren und eine Vorrichtung zum Aufheizen und atmosphärischen Kochen der Würze bei der Bierherstellung bekannt. Um den Aufheiz- und/oder Kochvorgang zu optimieren und eine optimale Würzequalität zu erhalten, wird der Aufheiz- und/oder Kochprozess abhängig von einer Sollwertprofilkurve, die in einer Steuereinrichtung abgespeichert wird und individuell vom Brauer erstellt werden kann, durchgeführt.

Aus der DE 10 55 482 ist eine Braupfanne, Würzekessel und dergleichen Kocher bekannt, welcher rohrartige, als Zu- und Ableitung eines Heizmittels dienende Träger im mittleren Kocherboden für eine im Kocherinneren befestigte, ring- und kegelförmig aus geschlossenen Doppelwänden gebildete Heizvorrichtung aufweist. Weiterhin enthält der bekannte Kocher eine Rührwerkswelle mit Rührscheit, die über eine mit Abstand vom Kocherboden angeordnete Heizvorrichtung geführt und bis in einen nach unten gewölbten Bodenheizring reicht.

Weiterhin sind bereits Verfahren bekannt, bei denen durch ein Einleiten der Würze in ein Vakuum ein Austreiben von unerwünschten Aromastoffen, welche als Leitsubstanz DMS aufweisen, bei einer Verdampfung von 1 - 2,5% der Würzemenge ermöglicht wird. Diese Vakuumverdampfung kann entweder in einem Außenkocher, beim Ausschlagen in den Whirlpool oder vor dem Plattenkühler erfolgen. Diese Verfahren dienen lediglich einer Intensivierung der Ausdampfung nach erfolgter atmosphärischer Kochung.

Alle bisher bekannten Verfahren beinhalten folglich ein Kochen der Würze. Dies bedeutet, dass bei allen bisher bekannten Verfahren der Würze thermische Energie zugeführt wird, um den Phasenübertritt von der Flüssigphase in die Gasphase zu ermöglichen, um damit die technologischen Kriterien des Würzekochens zu erfüllen. Ein nachgeschaltetes zusätzliches Verdampfen entweder durch Heizenergie oder durch Ausdampfen im Vakuum dient lediglich dem Austreiben von unerwünschten Aromastoffen.

Ausgehend von diesem Stand der Technik liegt der Erfindung die Aufgabe zugrunde, einen Weg aufzuzeigen, wie bei der Würzebereitung Energie eingespart werden kann.

Diese Aufgabe wird durch ein Verfahren mit den im Anspruch 1 angegebenen Merkmalen gelöst. In vorteilhafter Weise kommt bei diesem Verfahren ein Behälter mit den im Anspruch 11 angegebenen Merkmalen zum Einsatz.

Vorteilhafte Weiterbildungen und Ausgestaltungen der Erfindung ergeben sich aus den abhängigen Ansprüchen.

Die Vorteile der Erfindung bestehen darin, dass das beanspruchte Verfahren nicht nur die Möglichkeit des Ausdampfens von Aromastoffen eröffnet, sondern eine so große Verdampfung erreicht, dass auch überschüssiges Wasser zur Einstellung der gewünschten Würzekonzentration verdampft wird, ohne dass der Würze die zur Verdampfung benötigte Energie durch Wärme zugeführt werden muss. Die zum Phasenübertritt benötigte Wärmemenge wird aus der Flüssigkeit selbst gewonnen, welche sich dadurch abkühlt. Die Würze muss demzufolge nicht mit hoher thermischer Energie belastet werden und erfährt deshalb eine sehr schonende Behandlung, welche nachfolgend mit dem Begriff Würzeschonkochung beschrieben wird.

Bei dieser Würzeschonkochung kommt in vorteilhafter Weise ein Gefäß bzw. ein Behälter zum Einsatz, bei welchem die Verdampfung ausschließlich durch Entspannung im Vakuum erfolgt. Folglich werden die technologischen Erfordernisse des Würzekochens durch zwei Behandlungsschritte erreicht.
- Zunächst wird durch eine schonende Heißhaltung der Würze eine Sterilisation und eine Abtötung der Enzyme, eine Lösung der Hopfenbitterstoffe, eine Ausscheidung von gerinnbaren Eiweißstoffen, eine Bildung von Geschmacksund Aromastoffen sowie eine Bildung von reduzierenden Substanzen erreicht.
- Anschließend werden unerwünschte Aromastoffe und überschüssiges Wasser zur Einstellung der endgültigen gewünschten Würzekonzentration in einem evakuierten Expansionsbehälter verdampft.

Sollte vom jeweiligen Anwender eine Erhöhung der Ausgangskonzentration um mehr als 0,5 Massenprozent gewünscht werden, d. h. eine weitere Erniedrigung der Glattwasserkonzentration, dann kann die Würze in der Würzepfanne kurzzeitig zum Sieden gebracht werden. In diesem Fall wird im Vergleich zum vorbekannten Würzekochverfahren die klassische Kochzeit um mehr als 70% reduziert. Die verbleibenden 30% Kochzeit werden nur benötigt, um überschüssiges Wasser auszudampfen, welches nach der Würzepfanne nicht in einem Durchlauf ausgedampft werden kann.

Wird diese Erhöhung der Ausgangskonzentration vom Anwender nicht gewünscht, dann kann von einem Sieden der Würze vollständig abgesehen werden.

Weitere vorteilhafte Eigenschaften der Erfindung ergeben sich aus der nachfolgenden Erläuterung eines Ausführungsbeispiels anhand der Figuren.

Es zeigt
Figur 1 eine Vorrichtung gemäß der Erfindung zur Würzebereitung bei der Bierherstellung,
Figur 2 eine detailliertere Darstellung des Expansionsbehälters 8 von Figur 1 und
Figur 3 eine Draufsicht auf den Bodenteil A des Expansionsbehälters 8 längs der Schnittlinie S1 - S2 von Figur 2.

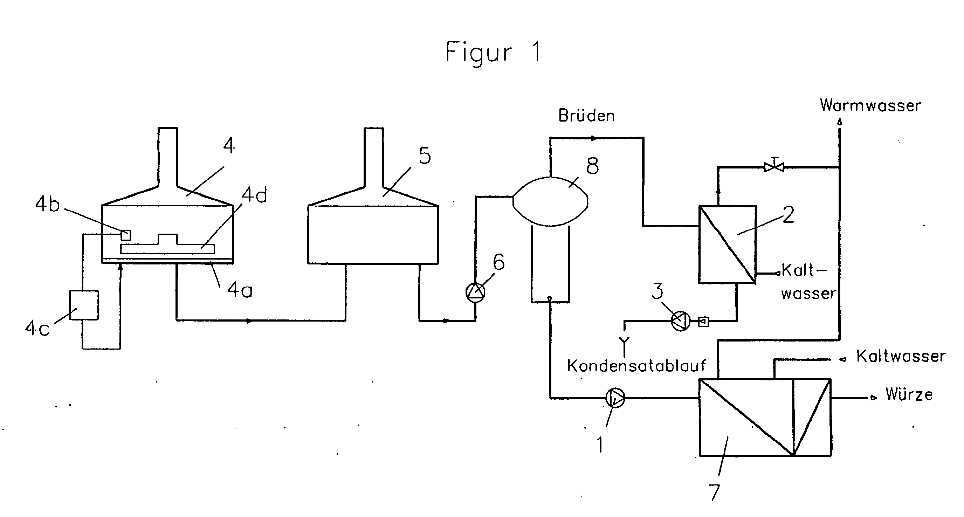

Die Figur 1 zeigt die zum Verständnis der Erfindung wesentlichen Bestandteile einer Vorrichtung zur Würzebereitung bei der Bierherstellung.

In der Würzepfanne 4 erfolgt durch eine Zufuhr von Wärme über den Heizboden 4a eine Erhitzung der Würze auf eine knapp unterhalb des Siedepunktes liegende Temperatur. Vorzugsweise erfolgt eine Erhitzung auf eine Temperatur, die bei etwa 0,5°C unterhalb der der geodätischen Höhenlage der Würzepfanne entsprechenden Siedetemperatur liegt. Diese Temperatur wird unter Verwendung eines Regelungssystems konstant gehalten, welches lediglich die Abstrahlungsverluste der Würzepfanne 4 ausgleicht. Zu diesem Zweck ist im Inneren der Würzepfanne 4 ein Temperatursensor 4b vorgesehen, mittels dessen die dort vorliegende Temperatur erfasst wird. Das vom Temperatursensor 4b abgeleitete Messsignal wird einer Regelautomatik 4c zugeführt, welche Ansteuersignale für den Heizboden 4a der Würzepfanne generiert.

Zur Konstanthaltung der gewünschten Temperatur der Würze im gesamten Innenbereich der Würzepfanne 4 ist ein Rührwerk 4d vorgesehen. Durch dieses Rühren der Würze in der Würzepfanne wird eine gleichmäßige Durchmischung und auch eine ausreichende Ausscheidung von gerinnbarem Eiweiß sowie eine homogene Umsetzung der weiteren, in der Würzepfanne durchzuführenden Vorgänge erreicht, welche eine Bewegung der Würze voraussetzen. Zu diesen weiteren Vorgängen gehören eine Sterilisation der Würze, eine Zerstörung der Enzyme, eine Lösung der Hopfenbitterstoffe, eine Austreibung unerwünschter Aromastoffe, eine Bildung von Geschmacks- und Aromakomponentensubstanzen und eine Verdampfung überschüssigen Wassers.

Die Dauer der Heißhaltung der Würze richtet sich nach den in der jeweiligen Anlage gegebenen Rohstoffvoraussetzungen und ist abhängig von der jeweils gewünschten Würzequalität.

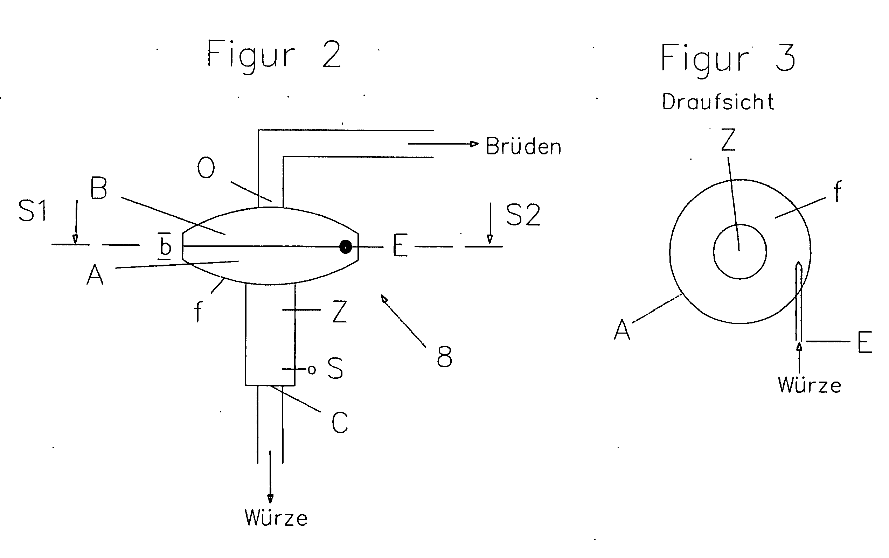

Die von der Würzepfanne 4 erhaltene Würze wird durch einen Behälter 5 zur Heißtrubabtrennung geführt, bei welchem es sich vorzugsweise um einen Whirlpool handelt. Aus diesem wird die Würze mittels einer Würzepumpe 6 abgesaugt und einem Verdampfer 8 zugeführt. Dieser ist ein evakuierter Expansionsbehälter, der - wie noch unten anhand der Figuren 2 und 3 erläutert wird - unter anderem ein Bodenteil, einen Deckel und ein zylindrisches Auffangteil enthält, auf dessen Boden sich die Würze sammelt.

Von dort wird die Würze mittels einer Würzepumpe 1 aus dem evakuierten Expansionsbehälter abgesaugt und einem Würzekühler 7 zugeführt. Dieser weist einen Kaltwasserzufluss und einen Warmwasserabfluss auf. An einem Ausgang des Würzekühlers 7 steht die aufbereitete Würze zur Verfügung.

Der im Bereich des Deckels des evakuierten Expansionsbehälters 8 entstehende Dampf bzw. Brüden wird aus dem Expansionsbehälter 8 abgesaugt und in einem Brüdenkondensator 2 verflüssigt. Zur Aufrechterhaltung des zur Verdampfung notwendigen Unterdruckes ist eine an den Brüdenkondensator 2 angeschlossene Vakuumpumpe 3 vorgesehen, die mit einem Kondensatablauf verbunden ist. Weiterhin weist der Brüdenkondensator einen Kaltwasserzufluss und einen Warmwasserabfluss auf. Letzterer ist über ein Ventil mit dem Warmwasserabfluss des Würzekühlers 7 verbunden.

Im evakuierten Expansionsbehälter 8, von welchem in der Figur 2 eine detailliertere Darstellung gezeigt ist, erfolgt eine so große Verdampfung, dass auf eine Eindampfung mittels Zufuhr von thermischer Energie verzichtet werden kann.

Der in der Figur 2 dargestellte Expansionsbehälter 8 ist an die Würzepumpe 6 angeschlossen. Über diese Pumpe wird die Würze mit 95 bis 97°C tangential über eine Düse E in den zumindest im wesentlichen halbkugelförmigen Bodenteil A des Behälters 8 gepumpt. Durch die von der Pumpe bewirkte Beschleunigung wird die in flüssiger Form vorliegende Würze durch die Zentrifugalkraft an der Wandung des Bodenteils A entlanggeführt. Wenn die an der Oberfläche auftretende Reibungskraft gleich der Zentrifugalkraft ist, wird die Flüssigkeit durch die Erdanziehungskraft nach unten gezogen und tritt in das mit dem Bodenteil A verbundene zylindrische Auffangteil Z über.

Der Umfang des Behälters 8 wird in Anpassung an die Würzemenge so gewählt, dass für jedes Flüssigkeitsteil im halbkugelförmigen Bodenteil A ein kompletter Umlauf erfolgt. Durch den bereits genannten tangentialen Eintritt der Flüssigkeit durch die Düse E in den Behälter wird der Flüssigkeitsstrom auf die gesamte Oberfläche f des Bodenteils A verteilt. Die Durchgangsöffnung der Düse sorgt für die erforderliche Beschleunigung der Flüssigkeit. Durch das Zusammenspiel der oben genannten Kräfte wird der Flüssigkeitsfilm auf die gesamte Fläche f des Bodenteils A auseinandergezogen und bildet dadurch einen dünnen Film.

Den Deckel B des Behälters 8 bildet ein zweites im wesentlichen halbkugelförmig ausgebildetes Bauteil. Diese halbkugelförmige Bauweise wurde insbesondere deshalb gewählt, damit der Behälter das Anlegen eines Vakuums ermöglicht, da die genannte Bauform dem entstehenden Unterdruck standhält.

Durch das unterhalb des Bodenteils A angeordnete zylinderförmig ausgebildete Auffangteil Z wird die Flüssigkeit auch in diesem Bereich des Expansionsbehälters als dünner Film verteilt, da die Flüssigkeit durch den abgerundet ausgestalteten Übergang vom Bodenteil zum Auffangteil an der Wandung entlang nach unten strömt, bevor sie am Auslauf C des Behälters zusammenfließt. Diese Aufrechterhaltung eines Flüssigkeitsfilms im Expansionsbehälter ermöglicht einen Phasenübertritt eines hohen Anteils der Flüssigkeit, ohne zu einem Aufschäumen zu führen, welches bei herkömmlichen Verfahren zur Verdampfung von Würze zwangsläufig erfolgt und einer Verdampfung entgegenwirkt.

Der in der Figur 2 dargestellte Expansionsbehälter 8 weist weiterhin eine Flüssigkeitssonde S auf. Steigt der Flüssigkeitspegel im zylindrischen Auffangteil Z bis in den Bereich der Flüssigkeitssonde S an, dann wird mittels eines Steuergerätes ein im Weg der dem Expansionsbehälter 8 zuzuführenden Würze angeordnetes Ventil geschlossen, so dass die Zufuhr von Würze unterbrochen ist. Dadurch kann sichergestellt werden, dass stets die gesamte Innenfläche f des Bodenteils A und des zylindrischen Auffangteils Z für die Ausbildung eines Flüssigkeitsfilms zur Verfügung steht.

Die Düse E des Expansionsbehälters 8 kann nicht nur - wie vorstehend beschrieben - im oberen Bereich des Bodenteils A angeordnet sein, sondern alternativ dazu auch im unteren Bereich des Deckels B.

An der Oberseite des Deckels B ist eine Öffnung O vorgesehen, durch welche der entstehende Dampf bzw. Brüden abgeleitet wird.

Die Figur 3 zeigt eine Draufsicht auf den Bodenteil A des Expansionsbehälters 8 längs der Schnittlinie S1 - S2 von Figur 2. Aus dieser Darstellung ist ersichtlich, dass der zylindrische Auffangteil Z des Behälters mittig unterhalb des Bodenteils A angeordnet ist, so dass bei einem Einspritzen der Flüssigkeit durch die Düse E auf der Fläche f des Bodenteils A ein Flüssigkeitsfilm gebildet wird, der sich über die gesamte Fläche f erstreckt und dann nach unten in das zylindrische Auffangteil abfließt.

Alternativ zum oben beschriebenen Ausführungsbeispiel ist es auch möglich, den Verdampfer bzw. Expansionsbehälter 8 zwischen der Würzepfanne 4 und dem Whirlpool 5 anzuordnen.

Die Form des Bodenteils A und des Deckels B wurde oben als im wesentlichen halbkugelförmig angegeben. Damit soll zum Ausdruck gebracht werden, dass das Bodenteil und der Deckel jeweils halbkugelförmig ausgebildet sein können oder aber auch - wie in der Figur 2 angedeutet - eine umlaufende senkrechte Wandung der Breite b aufweisen können oder aber auch kegelförmig oder ähnlich gewölbt ausgeführt sein können. Wesentlich dabei ist es, die genannten Teile so auszuführen, dass sie dem entstehenden Unterdruck standhalten und weiterhin auch die Ausbildung eines Flüssigkeitsfilms auf einer ausreichend großen Oberfläche gewährleisten.

Eine nicht in den Zeichnungen dargestellte vorteilhafte Ausgestaltung der Erfindung besteht darin, den oben genannten ersten Schritt unter Ausübung von überatmosphärischem Druck durchzuführen. Durch die Ausübung des überatmosphärischen Druckes ist die Siedetemperatur erhöht. Erfindungsgemäß wird bei dieser Ausgestaltung die Würze auf eine Temperatur erhitzt, die knapp unterhalb dieser aufgrund der Ausübung von überatmosphärischem Druck erhöhten Siedetemperatur liegt, und bei dieser Temperatur gehalten.

## Patentansprüche

1. Verfahren zur Würzebereitung bei der Bierherstellung, bei welchem die technologischen Erfordernisse des Würzekochens durch die beiden folgenden Behandlungsschritte erreicht werden:
- in einem ersten Schritt wird die Würze in einer Würzepfanne (4) mittels Zufuhr von Wärme auf eine knapp unterhalb der Siedetemperatur liegende Temperatur erhitzt und bei dieser Temperatur unter Verwendung eines Regelungssystems, welches lediglich die Abstrahlungsverluste der Würzepfanne ausgleicht, konstant gehalten;
- direkt anschließend an den ersten Schritt oder nach einer Heißtrubabscheidung wird die Würze ohne Zufuhr thermischer Energie in einem zweiten Schritt in einem evakuierten Expansionsbehälter (8) zum Verdampfen gebracht.

2. Verfahren nach Anspruch 1,
**dadurch gekennzeichnet, dass**
die Würze im ersten Schritt auf einer Temperatur gehalten wird, die im Bereich von etwa 0,5°C unterhalb der der geodätischen Höhenlage der Würzepfanne (4) entsprechenden Siedetemperatur liegt.

3. Verfahren nach Anspruch 1 oder 2,
**dadurch gekennzeichnet, dass**
im ersten Schritt die Wärmezufuhr über eine Heizeinrichtung (4a) der Würzepfanne (4) erfolgt.

4. Verfahren nach einem der vorhergehenden Ansprüche,
**dadurch gekennzeichnet, dass**
die Konstanthaltung der Temperatur im ersten Schritt unter Verwendung einer Temperaturerfassung im Inneren der Würzepfanne (4) erfolgt.

5. Verfahren nach einem der vorhergehenden Ansprüche,
**dadurch gekennzeichnet, dass** während des ersten Schrittes durch ein Rühren der Würze in der Würzepfanne eine konstante Temperaturverteilung gewährleistet wird.

6. Verfahren nach einem der vorhergehenden Ansprüche,
**dadurch gekennzeichnet, dass**
die Würze in der Würzepfanne kurzzeitig zum Sieden gebracht wird, um die Glattwasserkonzentration weiter zu erniedrigen.

7. Verfahren nach einem der vorhergehenden Ansprüche,
**dadurch gekennzeichnet, dass** die Würze aus dem Expansionsbehälter (8) mittels einer Würzepumpe (1) abgesaugt und einem Würzekühler (7) zugeführt wird.

8. Verfahren nach einem der vorhergehenden Ansprüche,
**dadurch gekennzeichnet, dass**
der im Expansionsbehälter (8) gebildete Dampf in einem Brüdenkondensator (2) verflüssigt wird.

9. Verfahren nach Anspruch 8,
**dadurch gekennzeichnet, dass** der zur Verdampfung notwendige Unterdruck mittels einer an den Brüdenkondensator (2) angeschlossenen Vakuumpumpe (3) erzeugt wird.

10. Verfahren nach einem der vorhergehenden Ansprüche,
**dadurch gekennzeichnet, dass**
der erste Schritt unter Ausübung von überatmosphärischem Druck erfolgt und die Würze in diesem ersten Schritt auf eine Temperatur erhitzt wird, die knapp unterhalb der aufgrund der Ausübung von überatmosphärischem Druck erhöhten Siedetemperatur liegt, und bei dieser Temperatur gehalten wird.

11. Expansionsbehälter (8), aufweisend:
- ein zumindest im wesentlichen halbkugelförmiges Bodenteil (A),
- einen zumindest im wesentlichen halbkugelförmigen Deckel (B), in dem eine Öffnung (O) vorgesehen ist,
- eine im Bodenteil oder im Deckel vorgesehene Düse (E),
- ein unterhalb des Bodenteils angeordnetes und mit diesem durch einen abgerundet ausgestalteten Übergang, über welchen im Behälter befindliche Flüssigkeit nach untern in das Auffangteil strömen kann, verbundenes zylindrisches Auffangteil (Z) und
- einen auf der Unterseite des Auffangteils vorgesehenen Auslauf (C).

12. Expansionsbehälter nach Anspruch 11,
**dadurch gekennzeichnet, dass**
im zylindrischen Auffangteil eine Flüssigkeitssonde (S) vorgesehen ist.

## Claims

1. Method for wort preparation in the production of beer, in which the technological requirements of wort cooking are achieved by the two following treatment steps:
- in a first step the wort is heated in a wort vessel (4) by means of feeder of heat to a temperature lying closely below the boiling temperature and is constantly kept at this temperature with use of a regulating system which merely compensates for the radiation losses of the wort vessel;
- directly subsequently to the first step or after a hot slurry separation the wort is caused to evaporate in a second step in an evacuated expansion container (8) without feed of thermal energy.

2. Method according to claim 1, **characterised in that** the wort in the first step is kept at a temperature lying in the region of approximately 0.5° C below the boiling temperature corresponding with the geodetic height position of the wort vessel (4).

3. Method according to claim 1 or 2, **characterised in that** in the first step the feed of heat is carried out by way of a heating device (4a) of the wort vessel (4).

4. Method according to any one of the preceding claims, **characterised in that** the keeping of the temperature in the first step constant is carried out with use of a temperature detection in the interior of the wort vessel (4).

5. Method according to any one of the preceding claims, **characterised in that** during the first step a constant temperature distribution is ensured by an agitation of the wort in the wort vessel.

6. Method according to any one of the preceding claims, **characterised in that** the wort in the wort vessel is briefly brought to boiling in order to further lower the concentration of last runnings.

7. Method according to any one of the preceding claims, **characterised in that** the wort is sucked out of the expansion container (8) by means of a wort pump (1) and fed to a wort cooler (7).

8. Method according to any one of the preceding claims, **characterised in that** the steam formed in the expansion container (8) is condensed in a vent condenser (2).

9. Method according to claim 8, **characterised in that** the subatmospheric pressure necessary for the evaporation is generated by means of a vacuum pump (3) connected with the vent condenser (2).

10. Method according to any one of the preceding claims, **characterised in that** the first step is carried out with application of hyperbaric pressure and the wort is heated in this first step to a temperature lying closely below the boiling temperature, which increased due to the application of hyperbaric pressure, and is kept at this temperature.

11. Expansion container (8) comprising:
- an at least substantially hemispherical base part (A),
- an at least substantially hemispherical cover (B), in which an opening (O) is provided,
- a nozzle (E) provided in the base part or in the cover,
- a cylindrical collecting part (Z) which is arranged below the base part and connected therewith by way of a transition, which is formed to be radiussed and by way of which liquid disposed in the container can flow downwardly into the collecting part, and
an outlet (C) provided on the underside of the collecting part.

12. Expansion container according to claim 11, **characterised in that** a liquid sensor (S) is provided in the cylindrical collecting part.

## Revendications

1. Procédé de préparation de moût lors de la production de bière, dans lequel les exigences technologiques de la cuisson du moût sont satisfaites par les deux étapes de traitement suivantes :
- dans une première étape, le moût est chauffé dans une chaudière à moût (4) par apport de chaleur à une température se trouvant à peine au-dessous de la température d'ébullition et est stabilisé à cette température en utilisant un système de régulation qui compense uniquement les pertes de rayonnement de la chaudière à moût ;
- directement à la suite de la première étape ou après un dépôt de bac à chaud, le moût est porté à évaporation sans apport d'énergie thermique dans une seconde étape dans un récipient d'expansion (8) évacué.

2. Procédé selon la revendication 1,
**caractérisé en ce que**
le moût est maintenu dans la première étape à une température qui se trouve dans la plage d'environ 0,5°C au-dessous de la température d'ébullition correspondant à la position en hauteur géodésique de la chaudière à moût (4).

3. Procédé selon la revendication 1 ou 2,
**caractérisé en ce que**
l'apport de chaleur est réalisé dans la première étape par le biais d'un dispositif de chauffage (4a) de la chaudière à moût (4).

4. Procédé selon l'une quelconque des revendications précédentes,
**caractérisé en ce que**
la température dans la première étape est stabilisée en utilisant une prise de température à l'intérieur de la chaudière à moût (4).

5. Procédé selon l'une quelconque des revendications précédentes,
**caractérisé en ce que**
une répartition constante de la température est garantie pendant la première étape par un brassage du moût dans la chaudière à moût.

6. Procédé selon l'une quelconque des revendications précédentes,
**caractérisé en ce que**
le moût est porté brièvement à ébullition dans la chaudière à moût afin de réduire encore la concentration du dernier lavage.

7. Procédé selon l'une quelconque des revendications précédentes,
**caractérisé en ce que**
le moût est aspiré du récipient d'expansion (8) au moyen d'une pompe à moût (1) et amené à un refroidisseur de moût (7).

8. Procédé selon l'une quelconque des revendications précédentes,
**caractérisé en ce que**
la vapeur formée dans le récipient d'expansion (8) est condensée dans un condenseur de buée (2).

9. Procédé selon la revendication 8,
**caractérisé en ce que**
la dépression nécessaire à l'évaporation est générée au moyen d'une pompe à vide (3) raccordée au condenseur de buée (2).

10. Procédé selon l'une quelconque des revendications précédentes,
**caractérisé en ce que**
la première étape est effectuée en exerçant une pression supérieure à la pression atmosphérique et le moût est chauffé dans cette première étape à une température qui se trouve à peine au-dessous de la température d'ébullition augmentée en raison de l'exercice d'une pression supérieure à la pression atmosphérique, et est maintenu à cette température.

11. Récipient d'expansion (8) présentant:
- une partie de fond (A) au moins essentiellement hémisphérique,
- un couvercle (B) au moins, essentiellement hémisphérique, dans lequel une ouverture (O) est prévue,
- une buse (E) prévue dans la partie de fond ou dans le couvercle,
- une partie collectrice (Z) cylindrique disposée au-dessous de la partie de fond et reliée à celle-ci par un passage configuré de manière arrondie, par le biais duquel du liquide se trouvant dans le récipient peut s'écouler vers le bas dans la partie collectrice et
- une sortie (C) prévue sur la face inférieure de la partie collectrice.

12. Récipient d'expansion selon la revendication 11,
**caractérisé en ce que**
une sonde à liquide (S) est prévue dans la partie collectrice cylindrique.
